# EUROPEAN PATENT APPLICATION

(11) **EP 4 679 303 A1**
(43) Date of publication of application: **14.01.2026**
(21) Application number: 24187128.4
(22) Date of filing: 08.07.2024
(51) Int. Cl.: G06F 21/33, H04L 9/32, H04L 9/40

(54) **A METHOD AND A SYSTEM FOR VALIDATING A KEM-BASED CERTIFICATE**

(71) Applicant: Siemens Aktiengesellschaft, 80333 München (DE)
(72) Inventor: Aschauer, Hans, 81829 München (DE); Bauer, Sven, 85591 Vaterstetten (DE); De Santis, Fabrizio, 80634 München (DE); Furch, Andreas, 85354 Freising (DE); Maftun, Aliza, 81247 München (DE)
(74) Representative: Siemens Patent Attorneys

(57) **Abstract**

The invention relates to a method for validating a KEM-based certificate (cert), where the certificate (cert) has been issued for a first entity (A) by a certification authority (CA) based on a public KEM key (pk) belonging to the first entity (A) and generated by a key encapsulation mechanism. The method of the invention comprises the following steps:
a) generating, by the certification authority (CA), a ciphertext (c) and a symmetric key (k) as well a first value (h(r), t), the ciphertext (c) and the symmetric key (k) being generated from the public KEM key (pk) with an encapsulation procedure (Encaps) of the key encapsulation mechanism and the first value (h(r), t) being generated with a cryptographic function (h, MACₖ);
b) transmitting, by the certification authority (CA), the ciphertext (c) and the certificate (cert) to the first entity (A), where the certificate (cert) includes the public KEM key (pk) and the first value (h(r), t);
c) generating, by the first entity (A), a symmetric key (k) from a secret KEM key (sk) and the cipher text (c) with a decapsulation procedure (Decaps) of the key encapsulation mechanism;
d) transmitting, by the first entity (A), the certificate (cert) and a second value (r, k) to a second entity (B), the second value (r, k) being the symmetric key (k) generated in step c) or a value (r) generated by using the symmetric key (k);
e) generating, by the second entity (B), a third value (u) with the cryptographic function (h, MACₖ) used for generating the first value (h(r), t), the cryptographic function (h, MACₖ) processing the second value (r, k), where the certificate (cert) is accepted by the second entity (B) in case that the third value (u) matches the first value (h(r), t) included in the certificate (cert) transmitted in step d).

## Description

The invention relates to a method and a system for validating a KEM-based certificate.

Cryptographic certificates form a core building block in a public key infrastructure (PKI). Each participant in a PKI owns a key pair consisting of a public key and a corresponding secret key. The public key is known to other parties within the PKI whereas the secret key is only known to the participant owning the key pair. A certificate binds the public key to the participant's identity, e.g., an IP address, a URL or an e-mail address.

To establish an encrypted connection between two participants, a so-called key encapsulation mechanism (KEM) may be used. This mechanism which is well-known in the prior art is based on the encapsulation of a shared symmetric key between two entities based on a so-called KEM key pair comprising a public KEM key and a private KEM key.

A key encapsulation mechanism consists of a generation procedure, an encapsulation procedure and a decapsulation procedure. The generation procedure creates the KEM key pair consisting of the public KEM key and the secret KEM key. This procedure is randomized. I.e., when the generation procedure is called repeatedly, it almost certainly returns a different pair of a public KEM key and a secret KEM key every time. Given the public KEM key, the encapsulation procedure of a key encapsulation mechanism creates a random symmetric key from the public KEM key and a corresponding ciphertext and returns both values. Given the secret KEM key of the KEM key pair and the ciphertext obtained by the encapsulation procedure, the decapsulation procedure returns the symmetric key generated by the encapsulation procedure.

To establish an encrypted channel between a first entity and a second entity based on a key encapsulation mechanism, the first entity generates a KEM key pair based on the generation procedure, keeps the secret KEM key of the KEM key pair and sends the public KEM key of the KEM key pair to the second entity. The second entity performs the encapsulation procedure based on the received public KEM key in order to obtain the ciphertext and the symmetric key. Thereafter, the second entity sends the ciphertext back to the first entity. The first entity then performs the decapsulation procedure using the secret KEM key and the ciphertext to obtain the symmetric key. As a consequence, both the first entity and the second entity know the symmetric key and can use it to encrypt and authenticate messages under any known symmetric encryption scheme.

When issuing a certificate for a public key, a certification authority verifies if the entity applying for the certificate is actually in possession of the corresponding private key. E.g., if the public key to be certified is a signature key, the entity applying for the certificate simply signs the certificate request with its private key whereupon the certification authority verifies the signature with the corresponding public key it is certifying. If the signature verification fails, the certification authority refuses to issue a certificate.

The above approach used for signature keys is not possible for KEM keys because a key encapsulation mechanism cannot be used to generate signatures in such a way.

Methods for validating a KEM-based certificate are known from the prior art. However, those methods require complex interactions between the requestor of the certificate and the certification authority or the exchange of multiple messages between the requestor and the certification authority.

Furthermore, it is known from the prior art to establish a proof-of-possession of a KEM-based certificate in combination with a certificate revocation (see RFC 4210, section 5.3.5). To do so, after the certification authority has generated a certificate for an entity, it encrypts the certificate with the public key of the certificate. Thereafter, the encrypted certificate is transmitted to the entity. In order to proof that the entity could decrypt the certificate with its secret key, the entity needs to return the certificate within a pre-defined time window. If the certificate does not arrive at the certification authority within this time window, the certification authority will revoke the certificate.

It is an object of the invention to provide a simple method for validation a KEM-based certificate in order to establish a proof-of-possession of the private KEM key.

This object is solved by the method according to claim 1. Preferred embodiments are disclosed in the dependent claims.

The method of the invention performs a validation of a KEM-based certificate to establish a proof-of-possession of the private KEM key associated with the certificate. The certificate being validated has been issued for a first entity (i.e. a first participant) by a certification authority based on a public KEM key belonging to the first entity and generated by a key encapsulation mechanism (i.e. the generation procedure of the key encapsulation mechanism). Any known variant of a key encapsulation mechanism comprising the aforementioned generation procedure, encapsulation procedure and decapsulation procedure may be used.

The method according to the invention performs steps a) to e) as described in the following. In step a), the certification authority generates a ciphertext and a symmetric key as well as a first value, where the ciphertext and the symmetric key are generated from the public KEM key with an encapsulation procedure of the key encapsulation mechanism and where the first value is generated with a cryptographic function.

In step b), the certification authority transmits the ciphertext and the certificate to the first entity, where the certificate includes the public KEM key and the first value. The first value may be embedded into the certificate using a well-known certificate extension.

In step c), the first entity generates a symmetric key from a secret KEM key and a ciphertext with a decapsulation procedure of the key encapsulation mechanism.

In step d), the first entity transmits the certificate (including the public KEM key and the first value) and a second value to a second entity (i.e. a second participant) where the second value is the symmetric key generated in the above step c) or a value generated by using the symmetric key.

In step e), the second entity generates a third value with the cryptographic function used for generating the first value, the cryptographic function processing the second value, where the certificate is accepted by the second entity in case that the third value matches the first value included in the certificate transmitted in step d).

The method of the invention provides a straightforward proof-of-possession of a KEM secret key for a corresponding certificate by shifting the verification of the proof-of-possession partially from the certificate authority to a second entity . The second entity is preferably an entity which shall communicate with the first entity based on the certificate.

In a first embodiment of the method according to the invention, the certification authority additionally generates (besides the ciphertext, the symmetric key and the first value) in step a) an encrypted value by encrypting a random number with an encryption procedure which uses the symmetric key generated with the encapsulation procedure. The cryptographic function used in step a) derives the first value from this random number without using the symmetric key. Any known encryption procedure may be used for encrypting the random number.

Furthermore, the certification authority additionally transmits (besides the ciphertext and the certificate) in step b) the encrypted value and the first entity additionally generates (besides the symmetric key) in step c) the second value by decrypting the encrypted value with a decryption procedure which uses the symmetric key generated by the decapsulation procedure. In step e), the cryptographic function derives the third value from the second value without using the cryptographic key.

The method according to the above first embodiment has the advantage that a simple cryptographic function may be used. In a preferred variant, the cryptographic function is a cryptographic hash function applied to the random number in step a) and to the second value in step e).

In a preferred variant of the above first embodiment, the certification authority generates in step a) one or more additional values, the cryptographic function deriving each additional value from another additional random number, where the certificate transmitted in step b) additionally comprises the one or more additional values. The additional values in the certificate may be assigned to other use cases than the proof-of-possession of the private KEM key. E.g., an additional value may be used in a certificate update/revocation process. To do so, the above steps of the first embodiment associated with an encrypted value of the random number may also be performed with respect to each additional random number. As a consequence, the first entity obtains a corresponding additional random number as a second value in step c). The first entity may then send the corresponding additional random number in encrypted form to the certification authority before the original certificate approaches its end of validity or after some revocation reasons occur. The certification authority then checks whether the additional value can be derived from the received additional random number with the cryptographic function. If this is the case, the certification authority will update the certificate or will include the certificate in its repository of revoked certificates.

According to a second embodiment of the invention, the cryptographic function used for generating the first value in step a) derives the first value from the KEM public key by using the symmetric key generated with the encapsulation procedure. I.e., contrary to the first embodiment described above, the cryptographic function uses the symmetric key. Furthermore, the first entity transmits in step d) the symmetric key as the second value and the cryptographic function derives in step e) the third value from the KEM public key by using the symmetric key transmitted in step d).

The above second embodiment has the advantage that there is no need to additionally implement an encryption and decryption procedure and to transmit an encrypted value, as it is the case for the first embodiment.

The cryptographic function used in the second embodiment is preferably a message authentication code function. Such functions are well-known. The message authentication code generated by such functions is normally used for proving that a corresponding message has not been changed during transmission.

In a preferred variant of the invention, the first entity encrypts the second value before transmitting it in step d) and the second entity decrypts the second value in step e) before the cryptographic function processes the second value. This enhances the security of the method according to the invention.

The encryption and decryption of the second value as described above is preferably based on a symmetric key. Preferably, the first entity generates the second symmetric key and a second ciphertext from a second public KEM key belonging to the second entity with an encapsulation procedure of a second key encapsulation mechanism. This second key encapsulation mechanism may be different from the key encapsulation mechanism described above. As any key encapsulation mechanism, the second key encapsulation mechanism includes a generation procedure, an encapsulation procedure and a decapsulation procedure.

After having generated the second symmetric key and the second ciphertext, the first entity encrypts the second value based on the second symmetric key and transmits the second ciphertext together with the encrypted second value to the second entity. Thereafter, the second entity generates the second symmetric key from the second ciphertext and the secret KEM key associated with the second public KEM key with a decapsulation procedure of the second key encapsulation mechanism. The second entity then decrypts the encrypted second value based on the second symmetric key.

According to the above described variant, a second key encapsulation mechanism may be used for deriving a second symmetric key used for encrypting and decrypting a second value.

Besides the above method, the invention refers to a system for validating a KEM-based certificate, where the system comprises a first entity, a second entity and a certification authority, where the certificate has been issued for the first entity by the certification authority based on a public KEM key belonging to the first entity and generated by a key encapsulation mechanism. The system is configured to perform the method according to the invention or one or more preferred embodiments thereof.

In the following, embodiments of the invention will be described with respect to the accompanying drawings wherein:
- Fig. 1 and Fig. 2: show diagrams illustrating the data exchange according to a first embodiment of the invention; and
- Fig. 3 and Fig. 4: show diagrams illustrating a data exchange according to a second embodiment of the invention.

The embodiments described in the following involve a first entity A requesting a certificate based on a public KEM key, a certification authority CA issuing the certificate and a second entity B which verifies whether the first entity is in possession of the private KEM key associated with the public KEM key of the certificate. This proof-of-possession is established before a secure communication is set up between the first entity A and the second entity B.

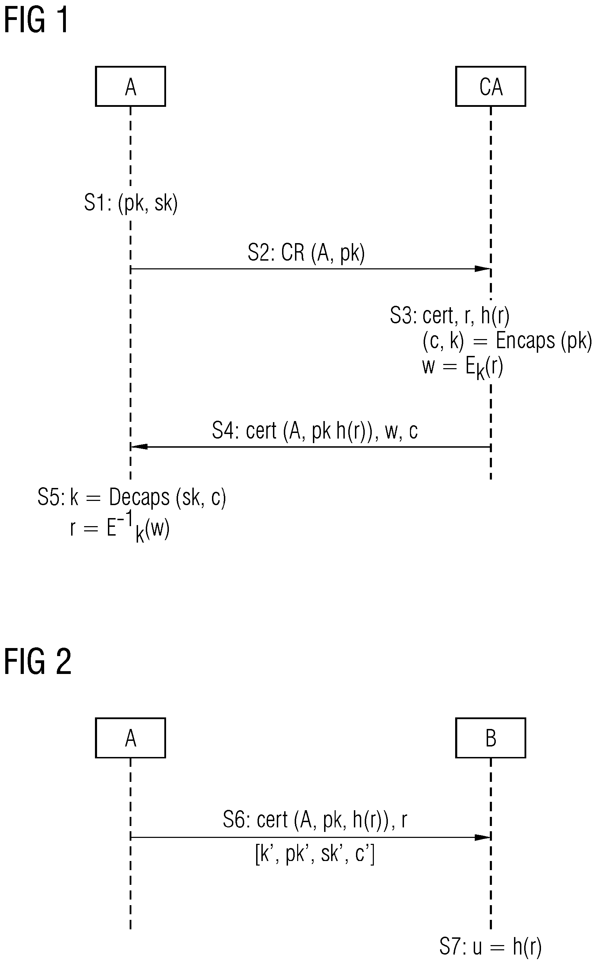

Fig. 1 illustrates the communication between the first entity A and the certification entity CA according to the first embodiment. In step S1, the first entity generates a public KEM key pk and a secret KEM key sk based on a generation procedure of a well-known key encapsulation mechanism. In step S2, the first entity sends a certificate request CR to the certification authority CA, where the certificate request CR specifies the first entity A and comprises the public KEM key pk generated in step S1.

In step S3, the certification authority CA generates a certificate cert, a random number r and a hash value h(r). The hash value h(r) is derived by a cryptographic hash function h applied to the random number r. The hash value h(r) is a variant of a first value as defined claim 1 and the cryptographic hash function h is a variant of a cryptographic function as defined in claim 1. Furthermore, the certification authority CA generates from the public KEM key pk a ciphertext c and a symmetric key k by the encapsulation function Encaps of the key encapsulation mechanism. Moreover, the certification authority CA generates an encrypted value w with an encryption procedure Eₖ which encrypts the random number r. Any known encryption procedure may be used for generating the encrypted value w.

In step S4, the certification authority CA transmits the certificate cert together with the encrypted value w and the ciphertext c to the first entity A. The certificate cert includes an identifier of the first entity A and the public KEM key pk. Furthermore, as a certificate extension, the certificate cert comprises the hash value h(r). In step S5, the first entity A generates the symmetric key k from a secret KEM key and the ciphertext with a decapsulation procedure of the key encapsulation mechanism. Furthermore, the first entity A decrypts the encrypted value w by a corresponding decryption procedure E⁻¹ₖ. The decrypted value corresponds to the random number r. The random number r is a variant of a second value as defined in claim 1.

Thereafter, as shown in Fig. 2, the first entity A transmits in step S6 the certificate together with the random number r derived in step S5 to the second entity B. In step S7, the second entity generates a third value u by applying the hash function h to the random number r received in step S6. Only in case that the secret KEM key sk and the public KEM key are from the same KEM key pair, the third value u corresponds to the hash value h(r) as generated in step S3. Hence, the certificate cert is accepted by the second entity B only in case that the third value u corresponds to the hash value h(r) generated in step S3.

In a modification of the first embodiment, the method may also use a symmetric key k' for encrypting the random number r before transmitting it in step S6 from entity A to entity B and for decrypting this encrypted random number before performing step S7. To do so, a second key encryption mechanism may be used which is based on a second public KEM key pk' belonging to the second entity B and a corresponding second secret KEM key sk' associated with the second public KEM key pk' and belonging to the second entity B. The first entity A performs an encapsulation procedure based on the second key encapsulation mechanism using the second public KEM key pk' of the second entity B. Thereafter, the first entity A sends a second ciphertext c' resulting from the encapsulation procedure to the second entity B along with the random number r encrypted by an encryption procedure using the symmetric key k' resulting from the encapsulation procedure. Thereafter, the second entity B performs a decapsulation procedure based on the second secret KEM key sk' and the second ciphertext c' resulting in the symmetric key k' which is then used by the second entity B for decrypting the encrypted random number r.

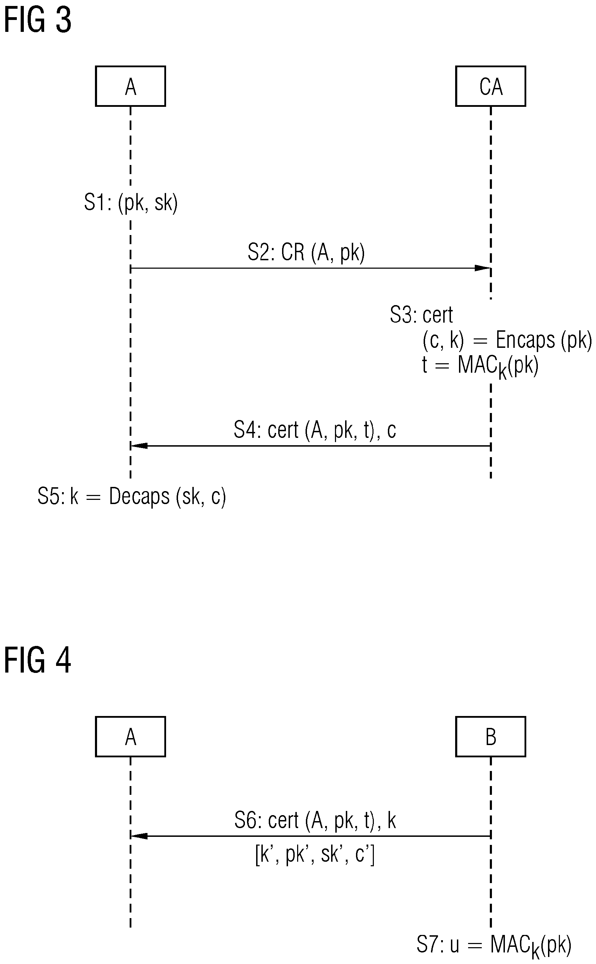

In the following, a second embodiment of the invention is described with reference to Fig. 3 and Fig. 4. Fig. 3 shows the message exchange between the first entity A and the certification authority CA whereas Fig. 4 shows the message exchange between the first entity A and the second entity B.

In step S1 of the second embodiment, a public KEM key pk and a secret KEM key sk are generated by the first entity A based on a generation procedure of a key encapsulation mechanism. Thereafter, in step S2, the first entity A transmits a certificate request CR including an identification of the first entity A and the public KEM key pk to the certification authority CA. Steps S1 and S2 of the second embodiment are identical to steps S1 and S2 to the first embodiment.

In step S3 of the second embodiment, the certification authority CA generates the certificate cert. Furthermore, the second entity B generates from the public KEM key pk a ciphertext c and a symmetric key k with an encapsulation procedure of the key encapsulation mechanism. Moreover, the certification authority CA generates a value t by applying a message authentication code function MACₖ on the public KEM key pk. The message authentication code function MACₖ is based on the symmetric key k. The value t is a variant of a first value as defined in claim 1 and the method authentication code function MACₖ is a variant of a cryptographic function as defined in claim 1.

In step S4, the certification authority CA transmits the certificate cert together with the ciphertext c to the first entity A. The certificate cert comprises an identification of the first entity A, the public KEM key pk as well as the value t (as an extension). Due to the use of a message authentication code function as a cryptographic function, there is no need to generate and transmit and encrypted value w, as it is the case in the first embodiment.

In step S5, the first entity A generates the symmetric key k with a decapsulation procedure of the key encapsulation mechanism by using a secret KEM key sk and the ciphertext c. Thereafter, as shown in Fig. 4, the first entity A transmits in step S6 the certificate cert including the value t as an extension together with the symmetric key k to the second entity B. In the embodiment described herein, the symmetric key k corresponds to a second value as defined in claim 1. In step S7, the second entity B derives a third value u by applying the message authentication code function MACₖ to the public key pk included in the certificate cert. In case that the third value u matches the value t transmitted in step S6, the certificate cert is accepted by the second entity B. In this case, the secret KEM key sk used in step S5 is part of the KEM key pair comprising the public KEM key pk, i.e. the first entity A is in possession of the secret KEM key sk associated with the public KEM key pk included in the certificate request CR.

Analogously to the first embodiment, the second embodiment may be modified by encrypting the symmetric key k transmitted in step S6 with a second symmetric key k' which is based on a second key encapsulation mechanism using a second public KEM key pk', a second secret KEM key sk' and a second ciphertext c'. This second key encapsulation mechanism has been described above with respect to the first embodiment for encrypting the random number r in step S6. Hence, reference is made to the above description.

The embodiments as described in the foregoing have several advantages. Particularly, a straightforward mechanism for validating a certificate is provided where the verification of the proof-of-possession of a private KEM key is partially shifted to a second entity instead of using a certification authority. In comparison to prior art methods, the message exchange and the interactions between the first entity and the certification authority are simplified. Furthermore, there is no need to implement a certificate revocation in case that the proof-of-possession of the private KEM key fails.

Independent of the grammatical term usage, individuals with male, female or other gender identities are included within the term.

### List of Reference

A first entity
B second entity
CA certification authority
S1, S2, ..., S7 steps
pk, pk' public KEM keys
sk, sk' secret KEM keys
k, k' symmetric keys
CR certificate request
cert certificate
c, c' ciphertexts
r random number
h(r) hash value
w encrypted value
t message authentication code
u third value
h hash function
MACₖ message authentication code function
Encaps encapsulation procedure
Decaps decapsulation procedure
Eₖ encryption procedure
E⁻¹ₖ decryption procedure

## Claims

1. A method for validating a KEM-based certificate (cert), where the certificate (cert) has been issued for a first entity (A) by a certification authority (CA) based on a public KEM key (pk) belonging to the first entity (A) and generated by a key encapsulation mechanism, the method comprising the following steps:
a) generating, by the certification authority (CA), a ciphertext (c) and a symmetric key (k) as well a first value (h(r), t), the ciphertext (c) and the symmetric key (k) being generated from the public KEM key (pk) with an encapsulation procedure (Encaps) of the key encapsulation mechanism and the first value (h(r), t) being generated with a cryptographic function (h, MACₖ);
b) transmitting, by the certification authority (CA), the ciphertext (c) and the certificate (cert) to the first entity (A), where the certificate (cert) includes the public KEM key (pk) and the first value (h(r), t);
c) generating, by the first entity (A), a symmetric key (k) from a secret KEM key (sk) and the cipher text (c) with a decapsulation procedure (Decaps) of the key encapsulation mechanism;
d) transmitting, by the first entity (A), the certificate (cert) and a second value (r, k) to a second entity (B), the second value (r, k) being the symmetric key (k) generated in step c) or a value (r) generated by using the symmetric key (k);
e) generating, by the second entity (B), a third value (u) with the cryptographic function (h, MACₖ) used for generating the first value (h(r), t), the cryptographic function (h, MACₖ) processing the second value (r, k), where the certificate (cert) is accepted by the second entity (B) in case that the third value (u) matches the first value (h(r), t) included in the certificate (cert) transmitted in step d).

2. The method according to claim 1, wherein
- the certification authority (CA) additionally generates in step a) an encrypted value (w) by encrypting a random number (r) with an encryption procedure (Eₖ) which uses the symmetric key (k) generated with the encapsulation procedure (Encaps), where the cryptographic function (h, MACₖ) derives the first value (h(r), t) from the random number (r) without using the symmetric key (k);
- the certification authority (CA) additionally transmits in step b) the encrypted value (w);
- the first entity (A) additionally generates in step c) the second value (r, k) by decrypting the encrypted value (w) with a decryption procedure (E⁻¹ₖ) which uses the symmetric key (k) generated by the decapsulation procedure (Decaps);
- the cryptographic function (h, MACₖ) derives in step e) the third value (u) from the second value (r, k).

3. The method according to claim 2, wherein the cryptographic function (h, MACₖ) is a cryptographic hash function (h) applied to the random number (r) in step a) and the second value (r, k) in step e).

4. The method according to claim 2 or 3, wherein the certification authority (CA) generates in step a) one or more additional values, the cryptographic function (h, MACₖ) deriving each additional value from another additional random number (r), where the certificate (cert) transmitted in step b) additionally comprises the one or more additional values.

5. The method according to claim 1, wherein
- the cryptographic function (h, MACₖ) used for generating the first value (h(r), t) in step a) derives the first value (h(r), t) from the KEM public key (pk) by using the symmetric key (k) generated with the encapsulation procedure (Encaps);
- the first entity (A) transmits in step d) the symmetric key (k) as the second value (r, k);
- the cryptographic function (h, MACₖ) derives in step e) the third value (h(r), t) from the KEM public key (pk) by using the symmetric key (k) transmitted in step d).

6. The method according to claim 5, wherein the cryptographic function (h, MACₖ) is a message authentication code function.

7. The method according to one of the preceding claims, wherein the first entity (A) encrypts the second value (r, k) before transmitting it in step d) and the second entity (B) decrypts the second value (r, k) in step e) before the cryptographic function (h, MACₖ) processes the second value.

8. The method according to claim 7, wherein the encryption and decryption of the second value is based on a second symmetric key (k').

9. The method according to claim 8, wherein
- the first entity (A) generates the second symmetric key (k') and a second ciphertext (c') from a second public KEM key (pk') belonging to the second entity (B) with an encapsulation procedure of a second key encapsulation mechanism,
- the first entity (A) encrypts the second value (r, k) based on the second symmetric key (k') and transmits the second ciphertext (c') together with the encrypted second value to the second entity (B),
- the second entity (B) generates the second symmetric key (k') from the second ciphertext (c') and the secret KEM key (sk') associated with the second public KEM key (pk') with a decapsulation procedure of the second key encapsulation mechanism, and
- the second entity (B) decrypts the encrypted second value based on the second symmetric key (k').

10. A system for validating a KEM-based certificate (cert), where the system comprises a first entity (A), a second entity (B) and a certification authority (CA), where the certificate (cert) has been issued for the first entity (A) by the certification authority (CA) based on a public KEM key (pk) belonging to the first entity (A) and generated by a key encapsulation mechanism, where the system is configured to perform a method comprising the following steps:
a) generating, by the certification authority (CA), a ciphertext (c) and a symmetric key (k) as well a first value (h(r), t), the ciphertext (c) and the symmetric key (k) being generated from the public KEM key (pk) with an encapsulation procedure (Encaps) of the key encapsulation mechanism and the first value (h(r), t) being generated with a cryptographic function (h, MACₖ);
b) transmitting, by the certification authority (CA), the ciphertext (c) and the certificate (cert) to the first entity (A), where the certificate (cert) includes the public KEM key (pk) and the first value (h(r), t);
c) generating, by the first entity (A), a symmetric key (k) from a secret KEM key (sk) and the cipher text (c) with a decapsulation procedure (Decaps) of the key encapsulation mechanism;
d) transmitting, by the first entity (A), the certificate (cert) and a second value (r, k) to the second entity (B), the second value (r, k) being the symmetric key (k) generated in step c) or a value (r) generated by using the symmetric key (k);
e) generating, by the second entity (B), a third value (u) with the cryptographic function (h, MACₖ) used for generating the first value (h(r), t), the cryptographic function (h, MACₖ) processing the second value (r, k), where the certificate (cert) is accepted by the second entity (B) in case that the third value (u) matches the first value (h(r), t) included in the certificate (cert) transmitted in step d).

11. The system according to claim 11 wherein the system is configured to perform a method according to one of claims 2 to 9.
